# EUROPEAN PATENT APPLICATION

(11) **EP 2 116 125 A2**
(43) Date of publication of application: **11.11.2009**
(21) Application number: 09159833.4
(22) Date of filing: 08.05.2009
(51) Int. Cl.: A01F 12/44

(54) **Cleaning fan housing with a clean-out access door**

(30) Priority: 08.05.2008 US 151624
(71) Applicant: CNH Belgium N.V., 8210 Zedelgem (BE)
(72) Inventor: Yoder, Denver R., Manheim, PA 17545 (US); Duquesne, Frank R.G., 8550, Zwevegem (BE); Bonatsos, James J., Brownstown, PA 17508 (US)
(74) Representative: CNH IP Department

(57) **Abstract**

A clean-out construction for a fan housing (102) for a cleaning fan construction (26) of an agricultural combine (10), which clean-out construction includes an access opening (120) formed in the fan housing (102) generally beneath the fan body and an access door (130) installed to be readily openable and reclosable by an operator so that any grain collected within the fan housing (102) beneath the fan body can be quickly and easily evacuated from the housing, such access door (130) being hingedly rotatable about a door pivot axis (137) adjacent one side of the access door (130) and having a linkage assembly (150) therewith operatively coupling the access door (130) to the fan housing (102) to limit and control the extent of rotation of the access door (130) about the door pivot axis (137).

## Description

This invention relates generally to the cleaning fans of clean grain and tailings conveying systems of agricultural combines and to a construction for facilitating the clean out of grain from the fan housings for such cleaning fans, and, more particularly, to a cleaning fan access door for facilitating the clean-out of grain that may have accumulated within the fan housing during harvesting operations.

In the harvesting of crops it is desired that the grain be separated from other elements or portions of the crop, such as from pod or cob fragments, straw, stalks, and the like. Agricultural combines typically have employed a rotary threshing or separating system for separating and segregating the grain from such other crop elements or portions. In general, rotary threshing or separating systems are so designed that, as threshing occurs, the resulting crop material is typically caused to fall or be conveyed to a clean grain and tailings conveying system, sometimes also referred to as a collecting and conveying system, or even more simply as a conveying system, for further processing, which processing typically includes the feeding of such resulting crop material from the rotary threshing or separating system onto an underlying vibratory cleaning system or onto one or more conveyors for conveyance to such a cleaning system.

The cleaning system typically includes a set of stacked sieves or shoes that are reciprocally moved, usually in the fore and aft directions, to separate or sift the grain from tailings and material other than grain (MOG). With many combines, as the grain is cleaned from the MOG, it falls through the sieves and drops onto or into one or more underlying clean grain pans that are disposed below the sieves, which pans feed the clean grain to an intersecting, cross, generally laterally extending, clean grain conveyance trough, sometimes referred to as the clean grain auger trough. In some combines, such clean grain pans may typically include a plurality of elongated and longitudinally oriented clean grain collecting troughs positioned side-by-side across at least a portion of the width of the combine to receive the clean grain that falls through the set of sieves. Such collecting troughs are configured to receive the grain falling therein and to convey such grain therethrough towards the clean grain auger trough.

The laterally extending clean grain conveyance trough receives the clean grain conveyed thereto from the clean grain collecting troughs and typically has associated therewith a conveyance mechanism, often in the form of an auger extending therethrough, for moving and delivering the clean grain in such clean grain conveyance trough to an elevator that carries the clean grain up to a clean grain tank. For convenience of reference, the clean grain conveyance trough will generally hereinafter be referred to as the clean grain auger trough regardless of the particular conveyance mechanism that may be employed therewith for moving the clean grain through such trough, and it should be recognized and understood that such appellation is not intended to indicate or require that an auger must necessarily be employed therein or associated with such trough.

During the vibration of the sieves, air is blown upwardly and rearwardly through the sieves to carry lighter elements of the MOG, or chaff, away. The heavier elements and tailings that are too large to fall through the sieves and too heavy to be blown away are caused to be moved by the vibrations, generally rearwardly along the top surfaces of the sieves, towards and over rear edges of the sieves to fall onto a tailings pan located below and extending somewhat beyond such rear edges. The tailings pan, similarly to the clean grain pan, feeds the tailings to an intersecting, cross, generally laterally extending, tailings conveyance trough, sometimes referred to as the tailings auger trough. In some combines, such tailings pans may typically include a plurality of elongated and longitudinally oriented tailings collecting troughs positioned side-by-side across at least a portion of the width of the combine to receive the tailings that fall thereinto from the rear edges of the sieves. Such collecting troughs are configured to receive the tailings therein and to convey such tailings therethrough towards the tailings auger trough.

The sidewardly extending tailings conveyance trough receives the tailings conveyed thereto from the tailings collecting pan and/or troughs and has a conveyance mechanism, often in the form of an auger extending therethrough, for moving and delivering the tailings to a tailings return conveyor operable for carrying the tailings upwardly, back to the cleaning or separating system of the combine, for reprocessing, including further threshing of the tailings. For convenience of reference, the tailings conveyance trough will generally hereinafter be referred to as the tailings auger trough regardless of the particular conveyance mechanism that may be employed therewith for moving the tailings through such trough, and it should be recognized and understood that such appellation is not intended to indicate or require that an auger must necessarily be employed therein or associated with such trough.

During the course of harvesting operations, topographical, operator control, and cleaning shoe functional conditions often result in some of the grain entering the cleaning fan housing and accumulating or collecting beneath the fan within the fan housing. Such accumulation of grain within the fan housing is undesirable and, over time, can cause or contribute to difficulties in the operation of the cleaning fan. Removal of the collected grain from within the housing has been inconvenient, often requiring the removal and subsequent reinstallation of fan housings, and the attendant, associated harvest time loss.

The invention now provides for a combine harvester according to the independent main claim. It provides for a clean-out construction for a fan housing for a cleaning fan construction of an agricultural combine, which clean-out construction includes a readily operable cleaning fan access door for facilitating the quick and easy clean out of grain that has collected within the fan housing during the course of harvesting operations, such as in a catch basin portion of the fan housing, while reducing the time required to effect such grain clean out. Such construction includes an access opening formed in the fan housing generally beneath the fan body and an access door installed to be readily openable and reclosable by an operator so that any grain collected within the fan housing beneath the fan body can be quickly and easily evacuated from the housing.

According to a preferred aspect of the invention, what is disclosed is a fan housing sized and configured to fit around and encompass therewithin a fan body, with a bottom side of the fan housing extending beneath the fan body and having an access opening therethrough. An openable and reclosable access door sized and configured to cover such access opening is installed to such fan housing to effectively seal such access opening when the access door is closed and to permit evacuation of collected grain through the access opening when the access door is opened.

As typically disposed in an agricultural combine, the fan body includes a generally horizontally rotating centrifugal blower or fan construction, sometimes referred to as a squirrel-cage fan, with a hub extending generally transverse to the length and direction of travel of the agricultural combine, operable to direct air generally upwards and toward the rear of the agricultural combine, and the access door, when closed, thus has one end, designated as the front end, disposed nearer the front to the agricultural combine and an opposite end, designated as the rear end, disposed nearer the rear of the agricultural combine. The front end of the access door is mounted to the fan housing to be rotatable about an axis of rotation, sometimes hereinafter referred to as the door pivot axis, that also extends generally transverse to the length and direction of travel of the agricultural combine, generally parallel to the axis of rotation of the fan construction, and the access door has a latch or linkage assembly associated therewith and operable to control the opening and closing of the access door about the door pivot axis, as well as the degree of rotation about such door pivot axis, and, consequently, the extent to which the access door may be opened.

According to one preferred form of the invention, the latch or linkage assembly is preferably of a form that is often referred to as an over-centre type latch construction, and is associated with the rear end of the access door. In general, and for purposes of further discussion herein, reference to an over-centre type latch should be considered to refer to a mechanism for locking and unlocking. or latching and unlatching, two components mechanically movable relative to each other, especially wherein one component, such as a movable panel, is pivotally movable about a hinge along one edge or side thereof, with respect to a stationary component, between a closed position lying generally within or closely adjoining the plane of the stationary component and an open position supported angularly to the stationary component. Such a latch is typically mounted at or near the edge of the movable panel, opposite the hinge, and includes one or more pairs of mechanical links, hereinafter referred to as a link set, wherein the links of such pair are pivotally connected to one another and also respectively pivotally connected to the stationary component and to the movable panel. For ease of reference in further discussions relative to the latch links, the ends of such links that are pivotally connected to one another may hereinafter be referred to as the common ends of such latch links and the opposite ends of such latch links may hereinafter be referred to as the distal ends of such latch links. Such latch links are so designed and constructed that they pivot through an articulated path of motion moving one link over-centre relative to the other for movement between a locked or latched position holding the movable panel closed and an unlocked position or unlatched position permitting swinging movement of the movable panel to the open position.

In many agricultural combines, the fan housing typically includes a first, or rear portion, sometimes hereinafter referred to as the air distribution portion or the air distribution housing, associated with the output side of the cleaning blower or fan and a second, or forward portion, sometimes hereinafter referred to as the fan body housing, that at least partially wraps around and encompasses the forward and greater portion of the fan body therewithin, with the fan body housing extending generally beneath and/or forward of the fan body as well as rearwardly to engage or mate with the air distribution portion. Typically, extraneous material that enters or becomes introduced into the fan housing collects at an area, sometimes hereinafter referred to as a catch basin, generally located below the fan body in the fan body housing.

With such fan housings, the access opening is thus disposed extending through the bottom side of the fan body housing, and the access door is installed to be pivotally rotatable about a door pivot axis disposed generally along or adjacent to a side of such access opening. Preferably, the forward end is installed to be pivotally rotatable about a door pivot axis disposed forwardly of such access opening. The latch links of a link set are preferably disposed with one link, hereinafter referred to as the door link, pivotally connected at or near the rear side of the access door and with the other link, hereinafter referred to as the housing link, pivotally connected to the bottom side of the air distribution housing.

To withstand the rigors of use, especially over an extended time, and for purposes of stability and reliability, the latch mechanism preferably includes a pair of generally like link sets disposed generally in a spaced side-by-side relationship with one another and so connected to operate in unison as the access door is being opened or closed. In such regard, the distal ends of the housing links may be securably attached to a first common shaft mounted extending transversely across and along the bottom side of the air distribution housing for rotation about an axis of rotation sometimes hereinafter referred to as the control axis and the distal ends of door links may be securably attached to a second common shaft extending generally along or generally adjacent to the rear side of the access for rotation about an access of rotation sometimes hereinafter referred to as the trailing edge axis. With such construction, the first common shaft may sometimes be referred to as the control shaft and the second common shaft may sometimes be referred to as the trailing edge shaft.

With such an embodiment, when the control shaft is caused to rotate in one direction, resultant pivotal movements of the housing links and the door links through their articulated paths of motion effects an opening of the access door such that such access door is rotated about the door pivot axis to move the rear end of such access door away form the bottom side of the fan housing, and when the control shaft is caused to rotate in the opposite direction, resultant pivotal movements of the housing links and the door links through their articulated paths of motion effects a closing of the access door such that such access door is rotated about the door pivot access to move the rear end of such access door towards the bottom side of the fan housing to close the access opening. The lengths and configurations of the housing and door links can be modified, as desired, to control the degree to which the access door may be opened.

A locking mechanism, such as a locking pin for locking the door and housing links in a given position relative to one another when the access door is closed, may be employed to ensure that the access door remains closed during harvesting operations and is not inadvertently or unintentionally caused to open.

Such a fan housing construction, with its access opening and access door, allows the user of an agricultural combine to readily access the fan housing to quickly and easily evacuate any grain collected therein during a harvesting operation and to rapidly reconfigure such agricultural combine for further operations.

An agricultural harvesting machine according to the present invention will now be described in further detail, by way of example only, with reference to the accompanying drawings, in which:
Figure 1 is a simplified side view of an agricultural combine including one form of a clean grain and tailings conveying system, wherein the tailings pan is effectively joined to the clean grain pan to be a rearward extension thereof, with the collecting troughs that feed to the clean grain and tailings auger troughs generally residing in the same inclined plane;
Figure 2 is a simplified side view of an agricultural combine including a somewhat different form of clean grain and tailings conveying system, wherein the clean grain pan and the tailings pan are separate pans, with the collecting troughs that feed to the clean grain and tailings auger troughs residing in different inclined planes;
Figure 3 is a simplified side view of an agricultural combine including a still different form of clean grain and tailings conveying system, wherein the clean grain pan and the tailings pan are separate pans and the clean grain and tailings are collected into the clean grain and tailings auger troughs by gravitational or an assisted flow along the separate clean grain and tailings pans;
Figure 4 is a simplified side view of elements of the collecting and conveying system of Figure 1;
Figure 5 is a simplified side view of elements of the collecting and conveying system of Figure 3;
Figure 6 is a side view of a typical fan housing that has associated therewith a clean-out construction, including an access door, according to the present invention, with the access door shown in a closed position;
Figure 7 is a partial, perspective view of the construction of Figure 6, viewed from the left rear, with the access door shown partly opened;
Figure 8 is an enlarged, sectional, side view, as viewed from the left side, of a portion of Figure 6, better showing the position and construction of the front side of the access door;
Figure 9 is an enlarged side view, as viewed from the left side, of a portion of the construction of Figure 6, better showing the linkage assembly for the access door in a folded close position;
Figure 10 is an enlarged, sectional, side view, as viewed from the left side, of a portion of Figure 9, better showing the position of the rear side of the access door, when closed, relative to various portions of the fan housing; and
Figure 11 is a partial, perspective view, as viewed from the left rear, highly similar to that depicted in Figure 7, of an alternative clean-out construction that includes several modifications that are considered desirable in certain applications.

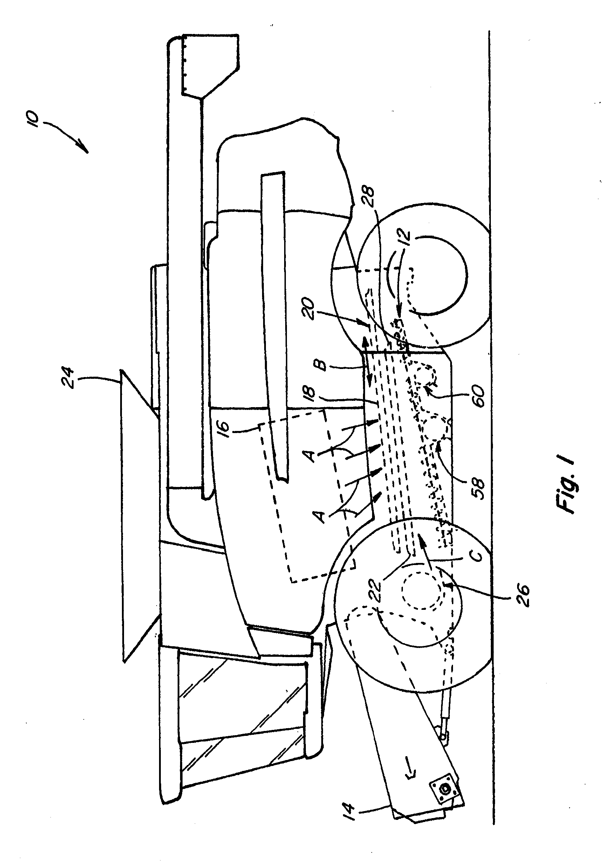

Referring now to the drawings, wherein like numbers refer to generally like items or features, Figures 1-3 depict several generally similar agricultural combines 10, 10', and 10" that include similar, but somewhat different, respective clean grain and tailings conveying systems 12, 12', and 12", each of which conveying systems 12, 12', and 12" includes a blower or fan construction in association with a respective cleaning system for the combine, which fan construction includes a cleaning fan access door in accordance with the present invention.

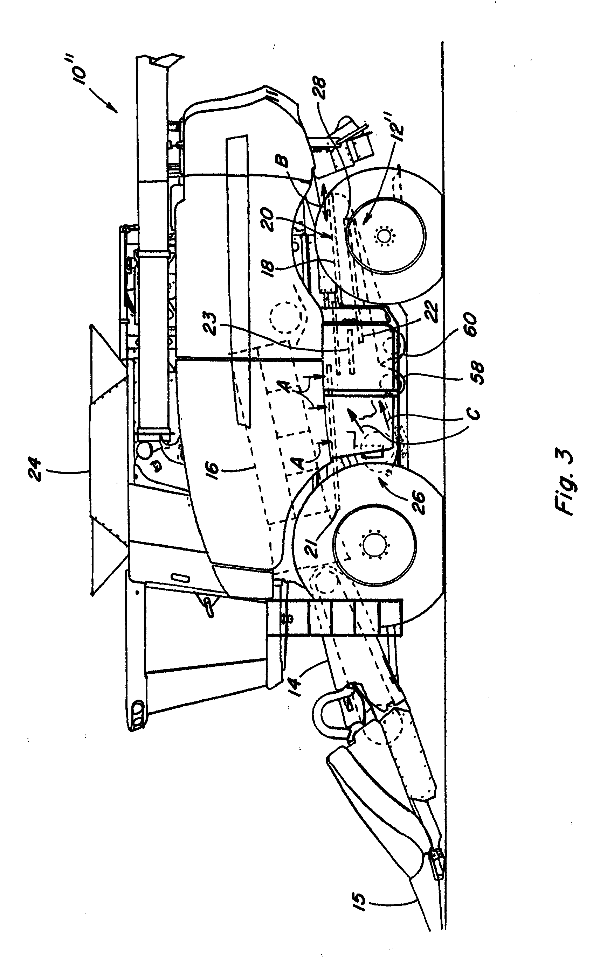

Combines 10, 10', and 10" are of conventional, well known constructions, each including a feeder house 14 on a front end thereof, to which is connectable a header, such as the header 15 depicted in Figure 3, operable to sever a swath of crops from a field as the combine is moved forwardly thereover and to convey the severed crops to feeder house 14. Feeder house 14 includes an internal conveying system (not shown), for conveying the crops upwardly and rearwardly into the bodies of the combines 10, 10', and 10", into an inlet of a separating or threshing system 16 of the combines. Threshing system 16 generally includes a rotary rotor at least partially enclosed in a concave defining an arcuate space therebetween, and in which space the crop material is processed, for separating grain, and material other than grain (MOG), from straw, with the straw being ejected rearwardly from the threshing system through the rear end of the combine for deposit on the field, in the well known manner.

As threshing system 16 operates, crop material will fall therefrom, as denoted generally by arrows A in Figures 1-3, onto an upper sieve 18 of a cleaning system 20 located generally below threshing system 16 within the body of combines 10 and 10' of Figures 1-2 or be conveyed therefrom by a conveyor, such as conveyor pan 21, of combine 10" of Figure 3 to such upper sieve 18. Such upper sieve 18 can, as shown in Figures 1-2, be formed to be a single vibratory member or, as shown in Figure 3, be formed to include several separable components. The cleaning system 20 also includes a lower sieve 22 positioned below upper sieve 18 in a stacked relationship therewith, and the sieves 18 and 22 are configured to be reciprocally moved or vibrated relative to one another to effect a sifting of material falling onto the upper sieve 18. In some combines, additional conveyor pans, such as the conveyor pan 23 shown in Figure 3, can be employed to direct grain materials falling through upper sieve 18 onto lower sieve 22.

As the crop material from the threshing system 16 falls or is conveyed onto upper sieve 18, air from a blower or fan construction 26 is blown upwardly and rearwardly through sieves 18 and 22, as denoted by arrows C. The combination of this air flow and the vibratory movement of the sieves 18 and 22 causes the lighter elements of the MOG, referred to also as chaff, to be blown upwardly and rearwardly away from sieves 18 and 22. Such chaff is typically blown into an optional chaff spreader (not shown), operable for distributing the chaff over a desired swath of the field from which the crop is cut, or directed into an optional chopper (also not shown), operable for mixing the chaff with straw for chopping and distributing such mix, or simply directed downwardly onto the field through a rear opening of the combine, all of which operations can be effected in well known manners.

Upper sieve 18 includes openings therethrough that are sized to allow separated grain as well as some smaller elements of MOG, sometimes referred to as tailings, to pass therethrough and to fall onto lower sieve 22 of the cleaning system 20, thus sifting the separated grain and tailings from larger elements of MOG. The larger elements of MOG that are unable to pass through upper sieve 18 are moved to the rear peripheral edge portion of such sieve by the vibratory movements of such sieve to fall thereover, either directly onto the underlying field or onto or into other apparatus for further processing, including chopping and/or spreading. Such further processing of such larger elements of MOG may be accomplished in various well known manners by well known equipment (not shown).

Lower sieve 22 has smaller openings therethrough than upper sieve 18, such that the sieves 18 and 22 will act as a progressive sifting or cleaning mechanism for separating and cleaning grain from the tailings that were also able to pass through sieve 18. To facilitate such sifting action and the flow of grain through the stacked sieves 18 and 22, such sieves are vibrated or reciprocally moved, typically in a fore and aft direction, as denoted by arrow B. The grain that falls through lower sieve 22 into clean grain and tailings conveying systems 12, 12', and 12" of combines 10, 10', and 10" is considered to be clean grain that is desired to be collected and ultimately conveyed to a grain tank 24.

The tailings that are allowed to pass through the upper sieve 18 often may still contain some unseparated grain, and retention of such tailings for further processing thereof to effect separation of the grain therefrom is generally desired. Such tailings, which are unable to pass through the smaller openings on lower sieve 22, are caused to move towards a rear peripheral edge portion 28 of sieve 22, and to fall thereover, by the vibratory movement of lower sieve 22, into clean grain and tailings conveying systems 12, 12', and 12" of combines 10, 10', and 10" for further processing.

The upper and lower sieves 18 and 22 of all the noted clean grain and tailings conveying systems 12, 12', and 12" generally operate similarly to one another to effect separation of the clean grain and tailings from other crop material, although there may be some variance from combine to combine in the particular configurations and positionings of components of such systems. Various techniques and constructions, including those depicted in Figures 1-3, may be employed to collect the grain and tailings for further processing.

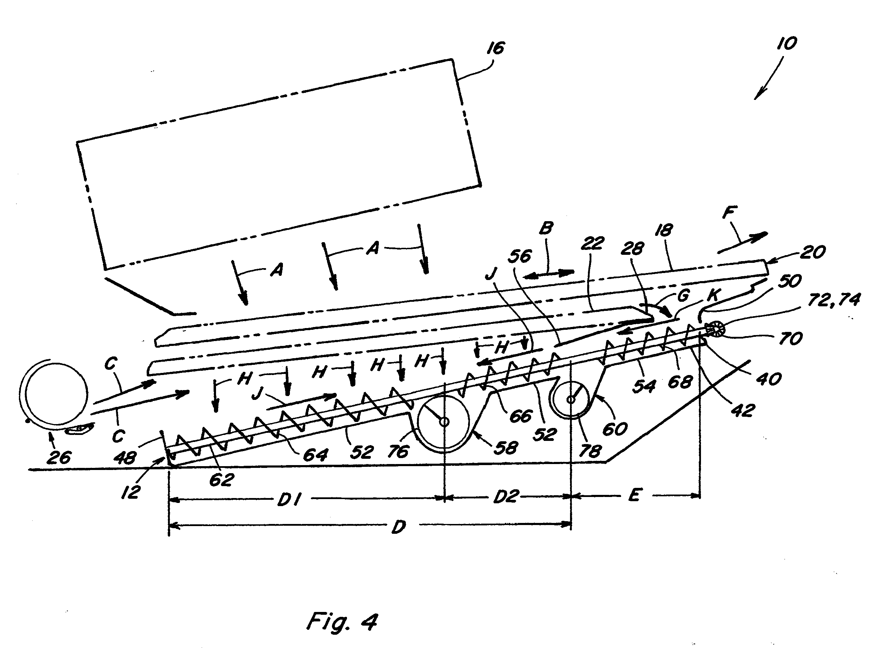

In such regard, Figure 4 depicts in greater detail certain elements of the cleaning system 20 as well as further details of the clean grain and tailings conveying system 12 of Figure 1. Figure 4 illustrates the manner in which sieves 18 and 22 may be positioned for reciprocal fore and aft movement. Such movement, as denoted by arrow B, may be readily effected by various suitable and well known drive mechanisms (not shown) that operate in well known manners. Clean grain and tailings conveying system 12, which is depicted as being fixedly connected or mounted below lower sieve 22 of cleaning system 20, generally includes a pan 40 that is fixedly mounted so as to be located directly beneath lower sieve 22 of cleaning system 20 and, for reasons that will become evident hereinafter, to extend beneath and beyond peripheral edge portion 28 of lower sieve 22.

Pan 40 of combine 10 preferably includes a plurality or array of elongated, longitudinally extending collecting troughs 42, one of which is depicted in Figure 4, positioned side-by-side to another across the width of pan 40. Such collecting troughs 42 preferably extend in the fore and aft direction, between a forward edge 48 of pan 40, and a rear edge 50. Each such collecting trough 42 has a clean grain receiving portion 52, located beneath those regions of lower sieve 22 through which clean grain is expected to fall, and a tailings receiving portion 54, positioned extending directly beneath peripheral edge portion 28 of lower sieve 22.

Clean grain receiving portion 52 has an overall fore and aft extent D, as denoted by arrow D, and tailings receiving portion 54 has an overall fore and aft extent E, as denoted by arrow E. The extent of clean grain receiving portion 52 is further subdivided into a forward clean grain receiving region, generally having a fore and aft extent denoted D1, and a rear clean grain receiving region, having an extent D2.

The portion D of the pan 40 that includes the clean grain receiving portions 52 of the collecting troughs 42 is sometimes considered to be or referred to as the clean grain pan and the portion E of the pan 40 that includes the tailings receiving portion 54 is sometimes considered to be or referred to as the tailings grain pan. The portions of the collecting troughs in the clean grain pan are then sometimes considered to be or referred to as clean grain collecting troughs while the portions of the collecting troughs in the tailings pan are then sometimes considered to be or referred to as tailings collector troughs.

Recapitulating, with particular reference to Figure 4, as grain and MOG flows downwardly from threshing system 16 onto upper sieve 18 during a harvesting operation, with such flow being denoted generally by arrows A, upper sieve 18 and lower sieve 22 are reciprocally moved, as denoted by arrow B, for the purpose of sifting and cleaning grain from MOG. Simultaneously, fan construction 26 operates to generate upward and rearward air flows, denoted by arrows C, which blow through the openings through sieves 18 and 22 to carry chaff rearwardly, away from cleaning system 20, as denoted by arrow F.

As such actions occur, tailings are allowed to pass through the openings of upper sieve 18, but not those of lower sieve 22. The tailings are moved by vibration rearwardly along the surface of lower sieve 22, until they reach peripheral edge portion 28, which is the rear edge of lower sieve 22, where such tailings fall therefrom, as denoted by arrow G. Those tailings fall onto tailings receiving portion 54 of pan 40, which is located directly below edge portion 28.

Meanwhile, clean grain is allowed to pass through lower sieve 22, as denoted by arrows H, so as to fall onto clean grain receiving portion 52 of pan 40. Some of the clean grain will typically fall onto clean grain receiving portion 52 in the forward region D1, and some will fall in the rear region D2. A deflector shield 56 is preferably disposed beneath the rear end portion of lower sieve 22 to deflect clean grain which falls therethrough forwardly, so as to fall onto clean grain receiving portion 52 of pan 40, as opposed to tailings receiving portion 54 located below the rear end.

Clean grain auger trough 58 is disposed generally cross-wise to and in communication with the clean grain collecting troughs of clean grain receiving portion 52 such that clean grain can be conveyed through the clean grain collecting troughs to the clean grain auger trough, and tailings auger trough 60 is disposed generally cross-wise to and in communication with the tailings collector troughs of tailings receiving portion 54. An elongated, helical auger 62 is supported in each collecting trough 42, so as to extend longitudinally in the fore and aft directions therealong, continuously through both the clean grain receiving portion 52 and the tailings receiving portion 54. Each auger 62 includes a first helical auger flight 64 extending in a first predetermined direction therearound through the forward clean grain receiving portion D1 of pan 52 and a second helical auger flight 66 extending in a second rotational direction therearound, opposite the first rotational direction, through the region D2 and through the tailings receiving portion 54. Each auger 62 is connected to a drive mechanism operable for rotating it, here the mechanism being illustrated as including a bevel gear 70 on the rear end of auger 62, which gear is enmeshed with a bevel gear 72 on a drive shaft 74 which extends sidewardly across the rear end of pan 40, so as to jointly rotate augers 62. Drive shaft 74 can be rotated by any suitable drive, such as, but not limited to, a belt, chain or shaft, in connection with a power plant of combine 10 (not shown).

When augers 62 are rotated in a predetermined rotational direction, flights 64, 66, and 68 will convey clean grain and tailings separately and simultaneously along collecting troughs 42, with clean grain from the clean grain collecting troughs being moved into clean grain auger trough 58 and tailings from the tailings collector troughs being moved into tailings auger trough 60, as denoted by respective arrows J and K. Clean grain auger trough 58 preferably has a helical auger 76 associated therewith and tailings auger trough 60 preferably has a similar auger 78 associated therewith, which augers are rotatable in the conventional manner using suitable drives (not shown) for conveying the clean grain and tailings, respectively, to a clean grain elevator (not shown) and a tailings return system (also not shown), in well known manners.

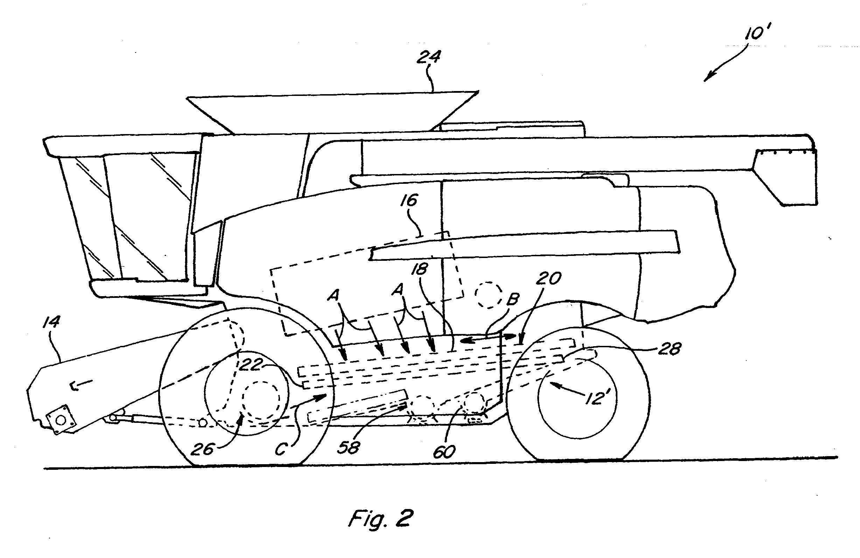

Although Figure 4 relates primarily to the collecting and conveying system 12 of Figure 1, as opposed to the collecting and conveying system 12' of Figure 2, those skilled in the art will recognise and understand that collecting and conveying system 12' is similar to collecting and conveying system 12, especially insofar as both of collecting and conveying systems 12 and 12' employ a fan construction 26 therewith for providing an air flow, as denoted by arrows C in Figures 1-2, that causes the chaff to be blown upwardly and rearwardly away from sieves 18 and 22. Like the collecting and conveying system 12 of Figure 1, collecting and conveying system 12' operates to convey the clean grain to a clean grain auger trough 58 and the tailings to a tailings auger trough 60, but utilises a configuration wherein the clean grain pan and the tailings pan are separate pans that may include separate collecting troughs with augers extending therethrough for conveying the materials that fall into such pans from the cleaning system 20 to the clean grain auger trough 58 and the tailings auger trough 60.

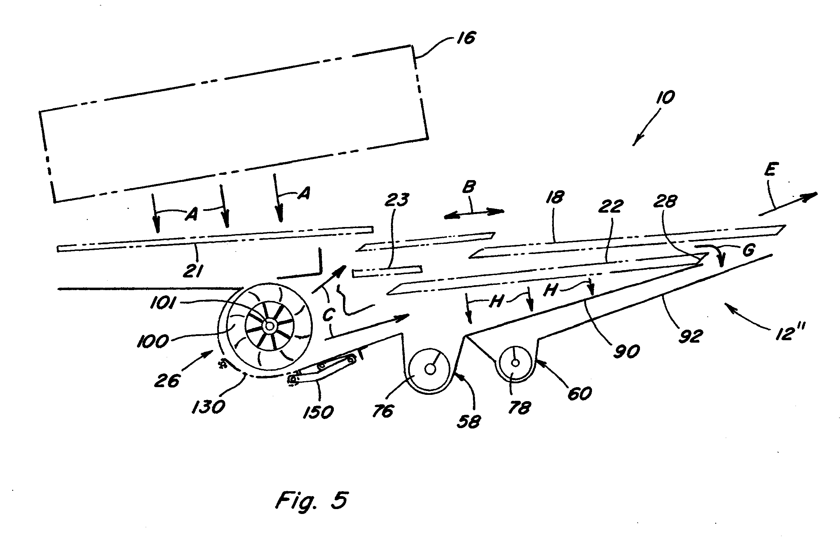

The collecting and conveying system 12" of combine 10" of Figure 3 is, in some respects, simpler than either of collecting and conveying systems 12 and 12' of combines 10 and 10' of Figures 1 and 2. Figure 5 depicts in greater detail a representative cleaning and conveying system 12" that collects the clean grain falling through sieve 22, such as by gravitational or an assisted flow along clean grain pan 90, into clean grain auger trough 58 and that collects the tailings that are moved rearwardly over the end 28 of sieve 22, as denoted by arrows G, such as by gravitational or assisted flow along tailings pan 92, into tailings auger trough 60.

In light of the foregoing, it should thus be appreciated that various items or features discussed herein that have identification markings that include a prime or double prime designation therewith, e.g., 12' and 12", serve a purpose highly similar to, if not essentially identical to, items or features that have the same numerical identification, but without the prime designation, e.g., 12, and that such noted collecting and conveying systems 12, 12', and 12" are representative of but a few of the constructions and techniques with which the present invention may be advantageously employed. In light thereof, it should also be understood that the particular forms of the cleaning and conveying constructions with which the present invention is employed, and the particular techniques employed thereby to separate and collect the clean grain and tailings from other crop material are not considered particularly relevant to the present invention, except to the extent that they make use of a blower or fan construction to direct air flow to the upper and lower sieves 18 and 22 and clean grain may enter and accumulate within the fan housing for such a fan construction.

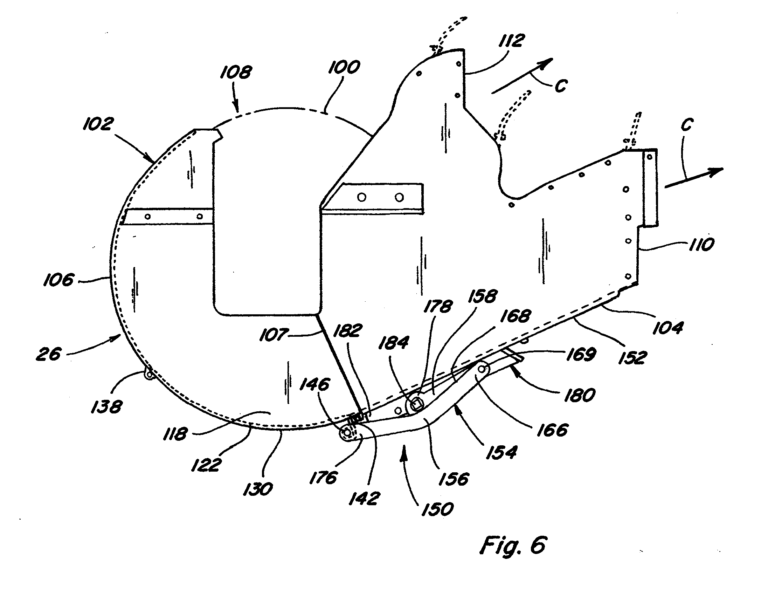

With such thoughts in mind, Figures 5 and 6 depict in a generic form different portions of a typical fan construction 26 such as might be employed with systems such as collecting and conveying systems 12, 12', and 12", including a fan body 100 (best shown in Figure 5 and depicted in dotted outline in Figure 6) that includes a generally horizontally rotating centrifugal blower or fan, or multiple fans, which may be of well-known or other suitable construction, mounted extending generally transverse to the length and direction of travel of the agricultural combine 10, or generally cross-wise across the width of the agricultural combine 10, to rotate about its hub 101.

The fan body 100 of fan construction 26 is typically disposed within a surrounding fan housing 102 (Figure 6) that is configured to generally fit around fan body 100. Such fan housing 102 includes a first, or rear portion 104, designated as the air distribution portion, and a second, or forward portion 106, designated as the fan body housing. The configuration of fan body housing 106 typically conforms, at least generally, to the configuration of fan body 100 and fits around the forward portion of such fan body 100, as shown in Figure 6. Air distribution portion 104 of fan housing 102 is shown mated to fan body housing 106, as along mating edge 107, and is so configured that, as the fan body 100 rotates about its hub 101, an air flow is produced to exit air distribution portion 104 at air flow exit apertures or ports 110 and 112, as denoted by arrows C, to be directed towards sieves 18 and 22 (Figures 1-3).

Insofar as addressed to this point in time, the configurations of the air distribution portion 104 and the fan body housing 106 are of forms well known in the art, and, as shown, the fan body housing 106 is sufficiently open on its upper side 108, and the air distribution portion 104 includes openings such as ports 110 and 112, that a portion of the grain sifted through sieves 18 and 22 can sometimes, due to the vibratory actions associated with sieves 18 and 22 as well as other conditions, including topographical, operator control, and cleaning shoe functional conditions, enter the fan housing 102, typically through ports 110 and 112, and fall or otherwise become directed to and concentrated in a catch basin area 118 (Figure 6) generally beneath fan body 100 within fan body housing 106.

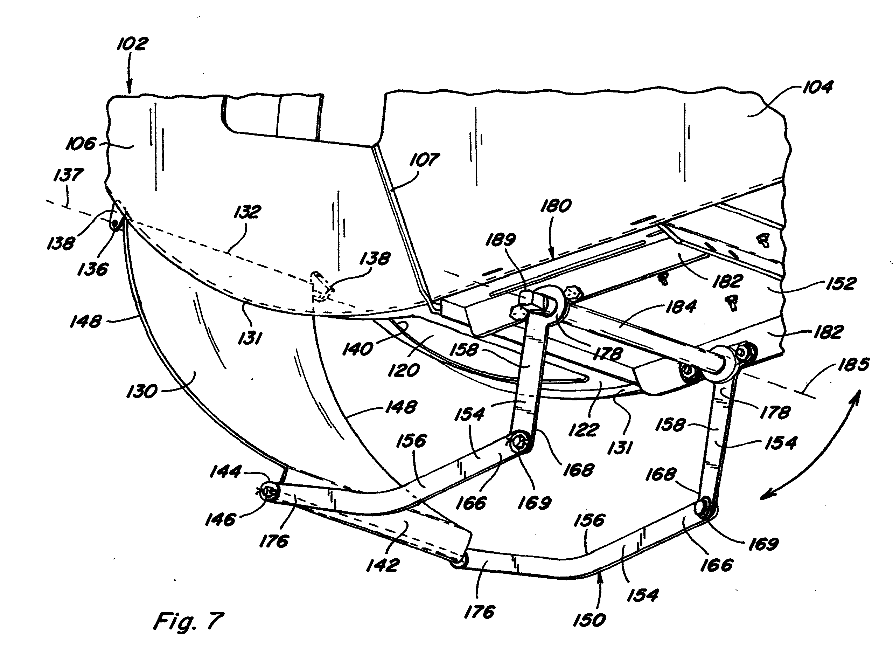

In accordance with the present invention, an access opening 120, better viewed in Figure 7, here of a generally rectangular shape, is formed in and along the bottom side 122 of fan body housing 106, generally beneath area 118 (Figure 6), and an access door 130, of a generally rigid construction, is installed to cover such access opening 120 during harvesting operations and to be openable at other times to facilitate the clean out of grain that has accumulated within the fan housing 102. Inasmuch as the fan body housing 106 is of a somewhat arcuate shape when viewed from the side, as in Figure 6, conforming to some extent to the shape and configuration of fan body 100, access opening 120 will have a corresponding somewhat arcuate shape, and access door 130 will typically also have such a corresponding shape. As illustrated in Figures 6-10, fan housing 102 is shown including lateral side skirts 131 along the lateral sides thereof, thus allowing access door 130 to fit snugly between side skirts 131 when closed.

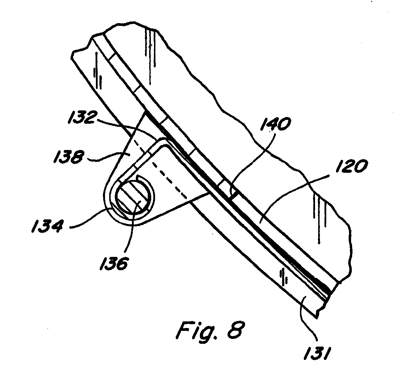

As is also shown in Figures 6-10, access door 130 includes a front or leading side 132 (better shown in Figures 7 and 8) with a rolled edge therealong forming a pivot tube 134 (Figure 8), with a primary or door pivot shaft 136 extending therethrough between a pair of spaced end journals 138 along the bottom side 122 of fan body housing 106 forward of the front or leading side 140 of access opening 120. Access door 130 is thus rotatably movable about primary pivot shaft 136, which defines a door pivot axis 137 (Figure 7).

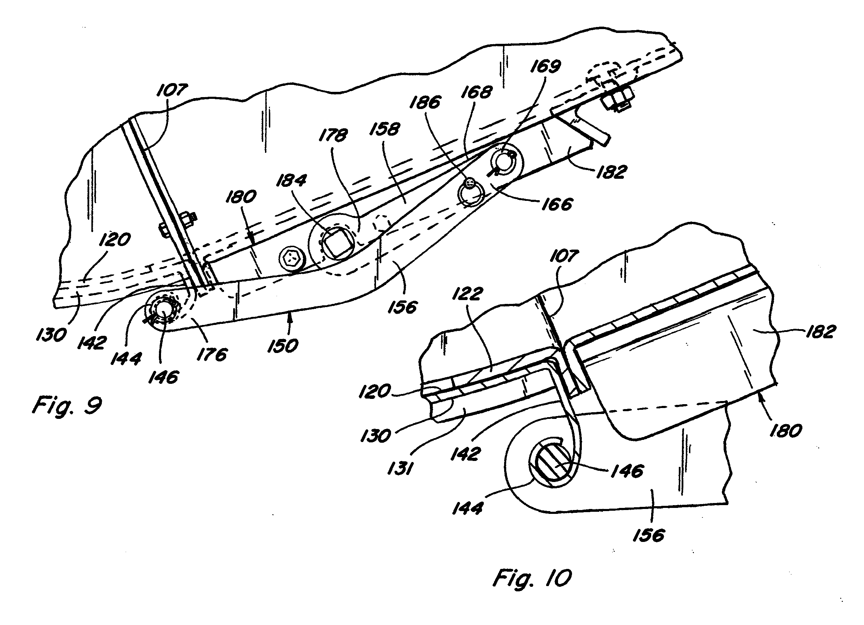

Access door 130 also includes a rear or trailing side 142 (Figures 7 and 10) with a rolled edge therealong forming a pivot tube 144 with a door throw pivot shaft 146 that extends therethrough to beyond the sides 148 (Figure 7) of access door 130, the purpose of which will be further addressed in that which follows. While such a pivot shaft mounting to access door 130 is preferred in the construction depicted, it should be recognized and understood that various other types of mountings could also be utilized without departing from the spirit and scope of the invention.

An over-centre linkage assembly 150 is operably connected between the access door 130 and the bottom side 152 of air distribution portion 104 of fan housing 102. Such over-centre linkage assembly 150 includes a pair of generally like link sets 154, each of which includes a door link 156 and a housing link 158 whose common ends 166 and 168, respectively, are pivotally connected to one another at pivot points or connections 169 and whose respective distal ends 176 and 178 are respectively operatively connected to the door throw pivot shaft 146 and to the bottom side 152 of air distribution portion 104 of fan housing 102 to establish a linked connection therebetween. In the depicted embodiment of Figure 7, a bracket assembly 180 is installed on the bottom side 152 of air distribution portion 104 of fan housing 102 and includes a pair of laterally spaced bracket members 182 with a control pivot shaft 184 extending therebetween, with the distal ends 178 of the housing links 158 being operatively connected to the control pivot shaft 184, which control pivot shaft defines a control axis 185.

With such configuration, when access door 130 is in a closed position, as depicted in Figures 6 and 8, the access door 130 closely abuts or forms a portion of the bottom side of the fan body housing 106 to cover access opening 120 during harvesting operations, with the door and housing links 156 and 158 disposed generally in a folded close position (Figure 6) extending generally adjacent to the bottom side 152 of air distribution portion 104 of fan housing 102 and with trailing side 142 closely abutting mating edge 107 (Figures 7 and 10). Preferably, the over-centre linkage assembly 150 will be so configured and constructed that, in the absence of an action exerted to open the access door 130, the over-centre linkage assembly 150 will maintain the access door 130 in a closed position. Nevertheless, in order to ensure that the access door 130 will remain in such a closed position during harvesting operations, a latching or locking mechanism, such as, with the depicted embodiment, a locking pin 186 (Figure 9), may preferably be employed to lock the access door 130 in its closed position and the door and housing links 156 and 158 in their folded close positions. In one form, the locking pin 186 may be inserted into holes that are formed in the door and housing links 156 and 158, which holes are registrable with one another when such door and housing links 156 and 158 are in their folded close positions to ensure that such door and housing links 156 and 158 remain in such folded close positions.

When it is desired that the access door 130 be opened to facilitate clean out of any grain collected in the fan housing 102, locking pin 186 may be quickly and easily removed and control pivot shaft 184 rotated about control axis 185 to effect an opening of the access door 130. When the control pivot shaft 184, when viewed from the left side of the agricultural combine 10, is rotated in a clockwise direction, common end 166 of housing link 156 is caused to also rotate about control axis 185. As this occurs, door and housing links 156 and 158 pivot relative to one another about pivot connections 169, which action results in the application of a downwardly directed force through door link 156 to the door throw pivot shaft 146 within pivot tube 144 and the rotation of such door throw pivot shaft 146 within pivot tube 144 to effect a torquing force at the rear or trailing side 142 of access door 130. Such torquing force effects a rotation of access door 130 about door pivot axis 137 to open access door 130, with the extent of such opening limited by lengths of the door and housing links 156 and 158.

When access door 130 is so opened, any grain accumulated within the fan housing 102, and particularly at area 118 (Figure 6), can flow downwardly along the inner side of access door 130 to fall to the ground or to an underlying container that may be positioned to capture such grain. If necessary, such as to dislodge or break up a blockage, a tool or implement can be inserted through the access opening for such purpose.

When the accumulated grain has been evacuated from fan housing 102, access door 130 can be easily closed by then rotating control pivot shaft 184 in the opposite direction to effect a reverse, articulated movement of door and housing links 156 and 158 to their folded closed positions, thereby causing access door 130 to be returned to its closed position as in Figures 6, 8, 9, and 10, in which position locking pin 186 may be reinstalled to lock access door 130 in such closed position.

Preferably, with the construction of Figure 7, control shaft 184 will be formed to have an outer end 189 engageable by a socket wrench or other tool that may be utilized to easily crank or rotate the control shaft 184 to effect operation of the access door 130.

Alternatively, trailing side 142 of the access door 130 may be grasped by a user, or a handle or other user graspable or operable member may be mounted or otherwise associated with the access door 130, such as a handle positioned or mounted near the rear or trailing side 142 of the access door 130, or may be integrated or otherwise mounted, to be graspable by a user, to pull and push the rear or trailing side 142 of the access door 130 downwardly or upwardly to effect the articulated movement of the door and housing links 156 and 158 and the rotational movement of access door 130 about its door pivot axis 137.

Although the embodiment discussed hereinabove has employed several pivot shafts at different locations where pivotal movements occur, those skilled in the art will recognise and understand that other types of connections and constructions could also be employed to similar effect. For example, pivot or swivel connectors, such as connectors similar to those connectors pivotally connecting the common ends of door and housing links 156 and 158, could be employed to connect the distal ends of such door and housing links 156 and 158 to the access door 130 and to the bottom side 152 of air distribution portion 104 in place of the connections that include pivot shaft 146 and 184. Similarly, the connector construction that includes door pivot shaft 136 could be replaced by pivot or swivel connectors or by various types of hinge-type mechanisms that permit rotational movement about the door pivot axis 137.

Additionally, while the over-centre linkage assembly 150 described and discussed hereinabove is presently preferred as the linkage assembly, it is contemplated that other types of linkage assemblies could also be advantageously employed. By way of example, and not of limitation, various slide and latch constructions could also be employed, and some of the envisioned constructions could employ biasing devices or assistive measures therewith.

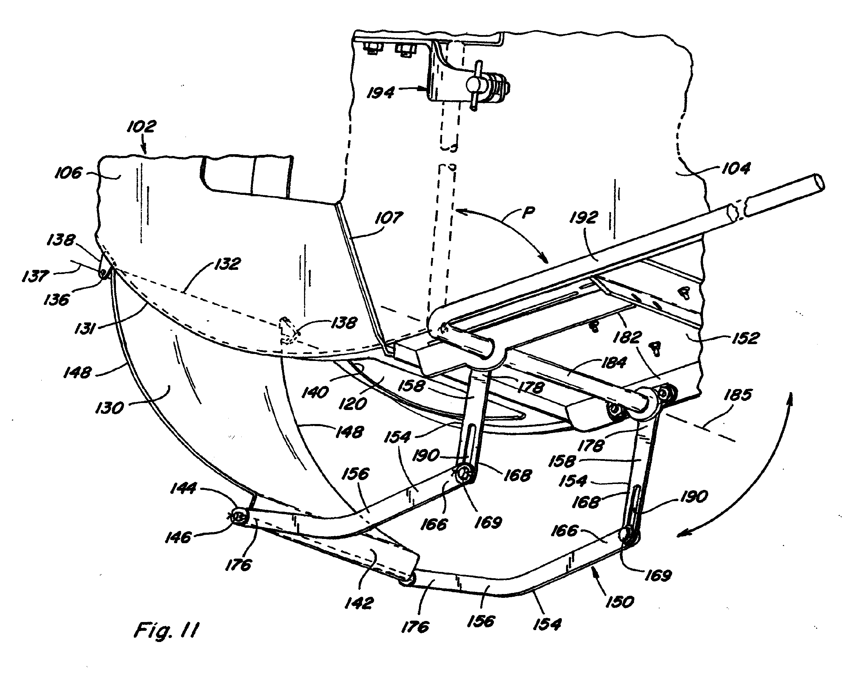

In light of the foregoing comments that address the possible use of various alternative components and various modifications that could be made to the constructions discussed hereinabove, and by way of illustration only and not of limitation, Figure 11 presents an alternative clean-out construction, highly similar to that depicted in Figure 7, but which includes several modifications that are considered desirable in certain applications. In the construction of Figure 11, the housing links 158 include slide apertures 190 within and along which pivot connections 169 may ride as the over-centre linkage assembly 150 is operated, and control pivot shaft 184 extends to beyond the side of the fan assembly and is joined to an elbow or L-shaped operator shaft 192 that extends along the side of air distribution portion 104. Such operator shaft 192 can be readily operated by a user to control the opening and closing of the access door 130 and operation of the linkage assembly 150, which operation, in view of the discussions and descriptions previously addressed herein, will be readily understood and appreciated by those skilled in the art.

In addition, in the construction of Figure 11, the operator shaft 192 can be operated to be moved, as depicted by arrow P, to engage with a latch bracket assembly 194 mounted on the exterior side of air distribution portion 104 or adjacent to the exterior portion of air distribution portion 104 so as to lock and maintain the operator shaft 192 and the joined control pivot shaft 184 in a fixed position when the access door 130 is closed, thereby locking the access door 130 closed.

Also, in the construction of Figure 11, the access door 130 may have a grasp opening therein, e.g., in the rear door side 142 through which a user can insert the fingers of a hand to grasp the access door 130 to assist with the opening and closing of such door.

It should be noted that, with respect to the embodiments of Figures 6-11 discussed hereinabove, the off-centre linkage assembly 150 is disposed to be external to the fan housing 102, in which disposition there need not be concerns with any interference with operation that might be caused by accumulated clean grain in the fan housing, such as could occur if the linkage assembly were otherwise disposed to fold above the access door 130 and to be within the fan housing 102 when in its folded close position. While it is considered more advantageous for the linkage assembly to be disposed external to the fan housing, it should nevertheless be recognized and understood that the linkage assembly could also be installed to be foldable and storable within the fan housing and/or above the access door 130. In such event, it may be desirable to employ a shield or like construction for the linkage assembly to better ensure that it would not become jammed and otherwise prevented from operating properly.

Similarly, while, for similar reasons, it is preferred that the hinged connection of the access door 130 to the fan housing 102 at door pivot axis 137 be disposed external to the fan housing 102, such hinge mechanism could also be installed as an interior hinge mechanism although, in such event, it would then likewise be advisable that a shield or like construction be utilized therewith to minimise possible problems that could arise from contact with the accumulated clean grain.

Additionally, although the access door 130 discussed hereinabove has been installed for pivotal movement about a door pivot axis at or near the front side of the access opening, it could also, alternatively, be installed to be pivotally openable about door pivot axes at or near the rear or right or left sides of the access opening.

In the light of all the foregoing, it should thus be apparent to those skilled in the art that there has been shown and described a construction for facilitating the clean out of fan housings of clean grain and tailings conveying systems of agricultural combines, including, more particularly, a fan housing construction that includes a readily openable and reclosable access door. However, it should also be apparent that, within the scope of the invention as defined by the following claims, many changes are possible and contemplated, including in the details, materials, and arrangements of parts which have been described and illustrated to explain the invention. Thus, while the foregoing description and discussion addresses certain preferred embodiments or elements of the invention, it should further be understood that concepts of the invention, as based upon the foregoing description and discussion, may be readily incorporated into or employed in other embodiments and constructions without departing from the scope of the invention, which is limited only by the claims which follow.

## Claims

1. A combine harvester (10) comprising a cleaning system (20) that includes at least one sieve (18, 22) and a cleaning fan construction (26) for directing an air flow (C) towards the at least one sieve, the cleaning fan construction comprising:
a rotative fan body (100) with a hub (101) extending generally transverse to the length and direction of travel of the combine harvester; and
a fan housing (102) disposed to generally wrap around and encompass the fan body (100) and having a bottom with a catch basin portion (118) for foreign material generally beneath the fan body (100),
**characterised in that** the cleaning fan construction (26) further comprises a clean-out construction that comprises:
- an access opening (120) through the bottom of the fan housing (102) adjacent the catch basin portion (118), the access opening having a first side (140) and an opposite second side;
- an access door (130) sized and configured to be positionable to cover the access opening and to prevent general access through said opening when so positioned, the access door having a first side (132) and an opposite second side (142), the first side (132) being pivotably connected to the fan housing (102) at a door pivot connection (134, 136) adjacent a first side (140) of the access opening (120) for rotatable movement of the access door about a door pivot axis (137) defined by the door pivot connection; and
- a linkage assembly (150) operatively connecting the access door (130) to the fan housing (102) for limiting and controlling the extent of rotation of the access door about said pivot axis (137), the access door (130) thus being openable to the extent permitted by said linkage assembly (150) to facilitate cleaning out of foreign material from the catch basin portion (118) of the fan housing (102).

2. A combine harvester according to claim 1 wherein said linkage assembly is an over-centre linkage assembly (150).

3. A combine harvester according to claim 2 wherein said over-centre linkage assembly (150) is disposed exteriorly to the fan housing (102).

4. A combine harvester according to an of the preceding claims wherein:
said linkage assembly (150) includes a link set (154) including a housing link (158) and a door link (156);
said housing link (158) and said door link (156) having common ends (166, 168) pivotally connected to one another at a link pivot point (169);
said housing link (158) including a distal end (178) operatively connected to said fan housing (102) for pivotal movement about a housing connection point (189); and
said door link (156) including a distal end (176) operatively connected to said access door (130) for pivotal movement about a door connection point (144).

5. A combine harvester according to claim 4 wherein:
pivotal movement of said housing link (158) about said housing connection point (189) is effecting pivotal movement of said housing link (158) and said door link (156) relative to one another about said link pivot point (169);
said pivotal movement of said housing link (158) and said door link (156) relative to one another about said link pivot point (169) is effecting pivotal movement of said door link (156) relative to said access door (130) about said door connection point (144);
said pivotal movement of said door link (156) relative to said access door (130) about said door connection point (144) is effecting pivotal movement of said access door (130) about said door pivot axis (137).

6. A combine harvester according to claim 4 or 5 wherein:
the fan housing (102) includes an air distribution portion (104) and a fan body housing (106) mated to one another at a mating edge (107),
the fan body housing (106) including the catch basin portion (118), such catch basin portion being generally adjacent to such mating edge,
said door pivot connection (134, 136) disposed on the fan body housing (106) of the fan housing (102),
said housing connection point (189) disposed on the air distribution portion (104) of the fan housing (102).

7. A combine harvester according to claim 6 wherein said access door (130), when in a closed position, closely abuts the mating edge (107).

8. A combine harvester according to any of the claims 4 to 7 wherein said linkage assembly (150) is an over-centre linkage assembly (150) that includes a plurality of generally like link sets (154), each of which link sets (154) including a housing link (158) and a door link (156).

9. A combine harvester according to any of the claims 4 to 8 wherein:
said over-centre linkage assembly (150) includes a door throw pivot shaft (146) extending generally across the width of said access door (130) and mounted thereto to define a door throw pivot axis; and
said door link (156) has a distal end (176) operatively connected to said door throw pivot shaft (146), rotation of said door throw pivot shaft (146) effecting relative rotational movement of said access door (130) and said door link (156) relative to one another.

10. A combine harvester according to any of the claims 4 to 9 wherein:
said over-centre linkage assembly (150) includes a control pivot shaft (184) extending generally across the width of the fan housing (102) and mounted thereto to define a control pivot axis (185),
said housing link (158) having a distal end (178) operatively connected to said control pivot shaft (184), rotation of said control pivot shaft (184) effecting rotation of said housing link (158).

11. A combine harvester according to claim 10 wherein said control pivot shaft (184) is operable by a user to effect opening and closing of said access door (130).

12. A combine harvester according to claim 10 or 11 further including an elbow extension portion associated with one end of said control pivot shaft (184), said elbow extension portion forming a generally L-shaped operator shaft (192) with a base generally aligned with said control pivot shaft (184) and an upright extending generally along the side of the fan housing (102), said operator shaft being movable by a user to effect rotation of said control pivot shaft (184).

13. A combine harvester according to claim 12 further including a latch assembly (194) mounted to the fan housing (102), said operator shaft engageable with said latch assembly to latch said operator shaft (192) in a given position to prevent undesired operation of said control pivot shaft (184) at certain times.

14. A combine harvester according to any of the claims 4 to 13 wherein said housing link (158) includes an elongated aperture (190) near the common end (168) thereof and said linkage assembly (150) includes a connection assembly (169) connecting said door link (156) to said housing link (158) and slidable along said elongated aperture as the door and housing links (156, 158) are moved relative to one another.

15. A combine harvester according to any of the preceding claims wherein said access door (130) includes a user-graspable portion that may be grasped and pulled by a user to effect opening of said access door (130) and pushed by a user to effect a closing of said access door (130).

16. A combine harvester according to any of the preceding claims wherein the fan body housing (106) includes lateral depending skirt portions (131) along its sides and said access door (130), when closed, closely abuts said skirt portions.

17. A combine harvester according to any of the preceding claims wherein:
said first side (140) of said access opening (120) is a front side located nearer the front of the fan housing (102) and said second side of said access opening (120) is a rear side located nearer the rear of the fan housing (102);
said first side of said access door (130) is a front side (132) and said second side of said access door (130) is a rear side (142); and
said front side (132) of said access door (130) is hingedly connected to the fan housing (102) generally adjacent to the corresponding front side of said access opening (120).

18. A combine harvester according to any of the preceding claims wherein said linkage assembly (150) is operable to open and close said access door (130) and to control the extent by which said access door (130) may be opened, said linkage assembly (150) including a locking mechanism (186) for locking the linkage assembly (150) in a given configuration.

19. A combine harvester according to claim 18 wherein:
said linkage assembly (150) is disposed exterior to the fan housing (102) and is operable between a folded condition when said access door (130) is closed generally extending along the bottom of the fan housing (102) and an unfolded condition when said access door (130) is open in which at least a portion of said linkage assembly (150) extends downwardly from the bottom of the fan housing (102) to said access door (130); and
said linkage assembly (150) includes a latching mechanism (186) for latching the linkage assembly (150) in said folded condition and maintaining said access door (130) closed.

20. A combine harvester according to claim 19 wherein:
said housing and door links (158, 156) of said link set (154) include holes therein registrable with one another when said door and housing links are in such folded close positions; and
said latching mechanism including a latching pin (186) insertable into said registered holes of said door and housing links (158, 156) when said housing and door links are in their folded close positions to maintain said housing and door links in their folded close positions.
